# EUROPEAN PATENT SPECIFICATION

(11) **EP 1 070 574 B1**
(45) Date of publication and mention of the grant of the patent: **11.06.2003**
(21) Application number: 00122492.2
(22) Date of filing: 22.12.1995
(51) Int. Cl.: B26D 7/26, F16C 13/02

(54) **Lock nut**
Verriegelungsmutter
Ecrou de blocage

(30) Priority: 14.02.1995 US 388015; 14.02.1995 US 388087
(43) Date of publication of application: 24.01.2001
(62) Divisional of application: 95120393.4
(73) Proprietor: EASTMAN KODAK COMPANY, Rochester, New York 14650 (US)
(72) Inventor: Fuss, Fred M., Rochester, New York 14650-2201 (US); Mesolella, John A., Rochester, New York 14650-2201 (US)
(74) Representative: Haile, Helen Cynthia

(56) References cited:
- WO-A-92/17641
- GB-A- 901 717
- US-A- 1 355 060
- US-A- 3 580 648
- US-A- 3 957 319
- US-A- 4 423 612
- US-A- 4 984 910

## Description

### Technical Field

The invention concerns improvements to rotary equipment such as punchers, slitters, embossers, scalers and the like in which cooperating rotating tools are mounted on cantilever shafts for acting on a work piece that passes between the rotating tools. More particularly, the invention relates to a lock nut of the type disclosed in US-A-3,580,648, useful for minimizing radial and axial run-out of bearings in such equipment.

Document US-3,580,648, regarded as the most relevant prior art, discloses a lock nut for installation on a threaded shaft, the nut comprising a body portion with a central threaded bore, a plurality of circumferentially spaced, threaded through bores in the body portion, each through bore being essentially parallel to an axis of rotation of the lock nut; and a corresponding plurality of screws in the circumferentially spaced, threaded bores, whereby at least one of the screws may be adjustably engaged with an adjacent structure to reduce run-out of a threaded shaft on which the nut is installed; and wherein a plurality of circumferentially spaced, threaded through bores extended radially toward the axis of rotation of the lock nut; and further a metallic plug, each of said metallic plugs being caused to move when the corresponding screw is turned thereby preventing axial run-out of said threaded shaft on which the nut is installed.

### Background Art

In apparatus such as rotary punchers, slitters, embossers, sealers and the like, which involve the use of a pair of cooperating rotary tools, the tools frequently have been mounted on outboard ends of driven cantilever shafts, to facilitate thread up of the work piece, maintenance of the equipment and the like. A problem with such apparatus has been that the ends of the cantilever shafts tend to deflect or flex slightly. Such deflection can lead to premature wear of the tools; and to incomplete or irregular punching, slitting, embossing or sealing. These problems in turn can require frequent shut down of the apparatus for adjustment, replacement of worn and broken parts and other repairs made necessary by such deflection of the cantilever shafts. One potential source of such deflection is radial and axial run-out of bearings supporting the shafts.

One solution attempted for such problems has been to provide, rigidly attached to the frame of the apparatus, an additional rotary support for the free end of each cantilever shaft. Aside from the difficulty of threading up and maintaining such an apparatus, the additional support may over constrain the shaft; so that, errors in alignment can cause high stresses on shafts, bearings and tools, leading ultimately to failures. Another solution is described in U.S. Patent 186,109 which shows half journal bearings mounted inboard of the tools from the ends of the cantilever shafts. This arrangement over constrains the shafts and would be expected to lead to early failure of the half journals. U.S. Patent 4,485,710 shows a paper cutting machine in which movement of non-cantilever shafts in low precision bearings is minimized by a bearing unit supported between a pair of non-cantilever shafts. U.S. Patent 4,770,078 shows a cutting and scoring apparatus in which tools mounted on cantilever shafts are pre-vented from moving by rollers mounted in the frame of the apparatus. This arrangement also results in over constraint of the shafts and tools.

Thus, a need has existed for a solution to the problem of controlling movement of tool mounted on cantilever shafts, without over constraining the shafts, tools or supporting bearings. A need has also existed for a solution to the problem of controlling run-out of the supporting bearings, which can contribute to movement of the tools.

### Summary of the Invention

The primary object of the invention is to provide a technique for minimizing radial and axial run-out of bearings in rotary equipment.

This objective is given only by way of an illustrative example; thus other desirable objectives and advantages inherently achieved by the invention may occur or become apparent to those skilled in the art. The scope of the invention is to be limited only by the appended claims.

To enable the positions of the bearings to be adjusted precisely on their respective shafts, a lock nut may be threaded onto an outboard end of the shaft and engaged with a respective bearing. The lock nut as recited in claim 1, which defines the invention may include a body portion with a central threaded bore, a plurality of circumferentially spaced, threaded through bores essentially parallel to an axis of rotation of the lock nut; and a corresponding plurality of screws in the threaded bores, at least one of the screws being adjustably engaged with the respective bearing. Brass contact plugs may be provided between the screws and the bearings. Since the bearings each have an inner race and an outer race, the lock nut preferably engages the inner race. The lock nut also may includes a further plurality of circumferentially spaced, threaded through bores extended radially toward the axis of rotation of the lock nut; a corresponding further plurality of radially movable, threaded shoes; and a corresponding further plurality screws in the further plurality of through bores for pressing the shoes against the shaft. The bearings may include a pair of housings, one housing surrounding each bearing. The lock nut may be used to adjust the positions of the housings to greatly reduce radial and axial runout.

The invention provides numerous significant advantages. Because of the presence of the lock nut, bearing run-out can be reduced substantially, which helps to minimize the relative movement of the tools and leads to improved punching, slitting, embossing, sealing and the like. Tool wear is more uniform along the axis of rotation of the tool. Higher speeds of operation frequently are achievable. Existing apparatus may be modified readily by installing the lock nut outboard of bearings already mounted on shafts.

### Brief Description of the Drawings

The foregoing and other objectives, features and advantages of the invention will be apparent from the following more particular description of the invention, as illustrated in the accompanying drawings.
Figure 1 shows a front elevation view of an apparatus embodying the invention.
Figure 2 shows a sectional view taken along line 2-2 of Figure 1.
Figure 3 shows a perspective view of a constraint member.
Figure 4 shows a plan view of a lock nut according to the invention.
Figure 5 shows a sectional view along line 5-5 of Figure 4.

### Description of the Preferred Embodiments

The following is a detailed description of the invention, reference being made to the drawings in which the same reference numerals-identify the same elements of structure in each of the several Figures.

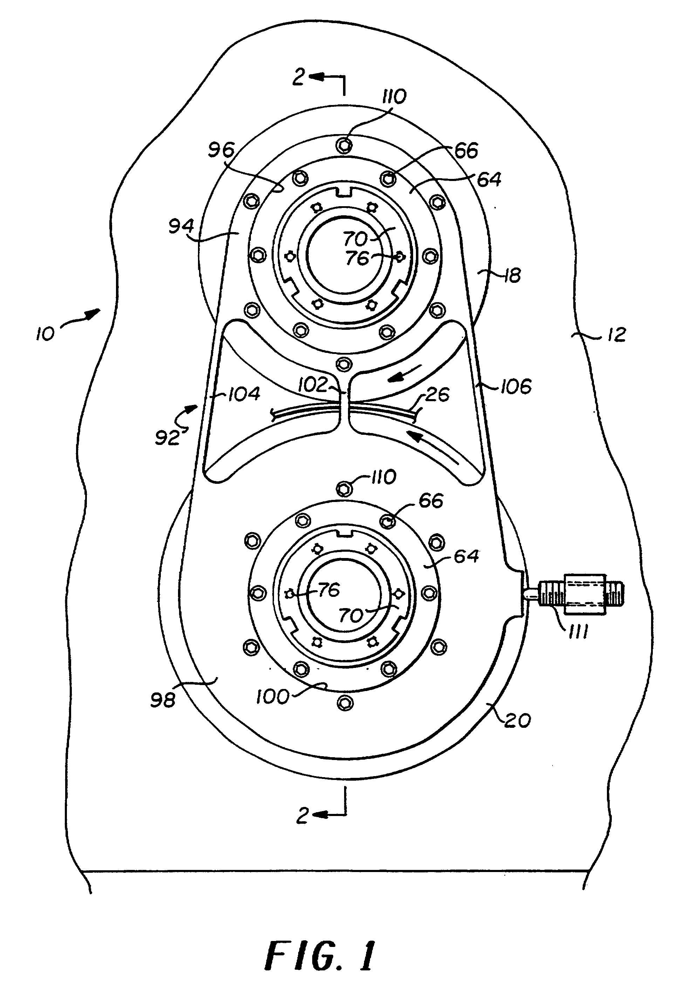

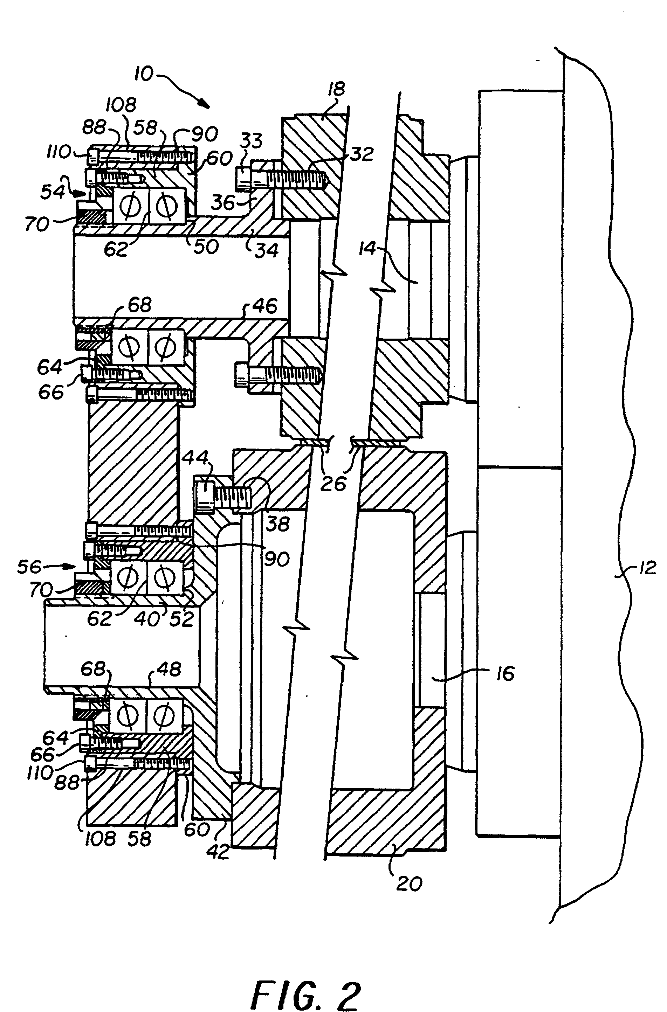

Referring to Figures 1 to 3, the lock nut of the invention is particularly useful in an apparatus 10 which includes a drive module 12 from which extends a pair of cantilever shafts 14, 16 which are rotated by module 12 during operation. In the illustrated apparatus, a rotary tool 18 is fixedly mounted for rotation with shaft 14 and a cooperating rotary tool 20 is fixedly mounted for rotation with shaft 16. Those skilled in the art will understand that the invention may be applied to rotary equipment which includes a wide variety of rotary, cooperating tools, such as those used in punchers, slitters, embossers, sealers, printers, calendaring rolls, web choppers and the like. In the familiar manner, a work piece 26, such as an elongated strip or strips of material, is drawn between the rotating tools to be punched, slit, embossed, sealed or to undergo whatever transformation can be completed with such rotary tools.

Rotary tool 18 is provided with a circumferential array of threaded holes 32. A cantilever shaft extension 34, having a circumferentially and radially extending flange 36, is mounted on tool 18 by screw 33 extended into hole 32. Similarly, rotary tool 20 is provided with a circumferential array of tapped holes 38. A cantilever shaft extension 40, having a radially extending flange 42, is mounted to tool 20 by a plurality of screws 44. Alternatively, shafts 14, 16 may be enlarged and extended through tools 18, 20, respectively. To minimize the mass and maximize the resonant frequency of the overall assembly, shaft extensions 34, 40 preferably are provided with respective central bores 46, 48. Shaft extensions 34, 40 include respective shoulders 50, 52. Mounted against the shoulders are bearing assemblies 54, 56, each of which includes a cylindrical housing 58 having a radially and circumferentially extending flange 60 and surrounding a duplex bearing 62. Assemblies 54, 56 are fitted onto the shaft extensions against shoulders 50, 52. A retainer ring 64 is mounted into each housing 58 into contact with the outer race of bearing 62. A plurality of screws 66 secure each ring 64 to its respective housing 58. A hardened washer 68 is positioned on each shaft extension against the inner race of bearing 62. A lock nut 70 according to the invention is threaded onto the end of each shaft extension and into engagement with washer 68.

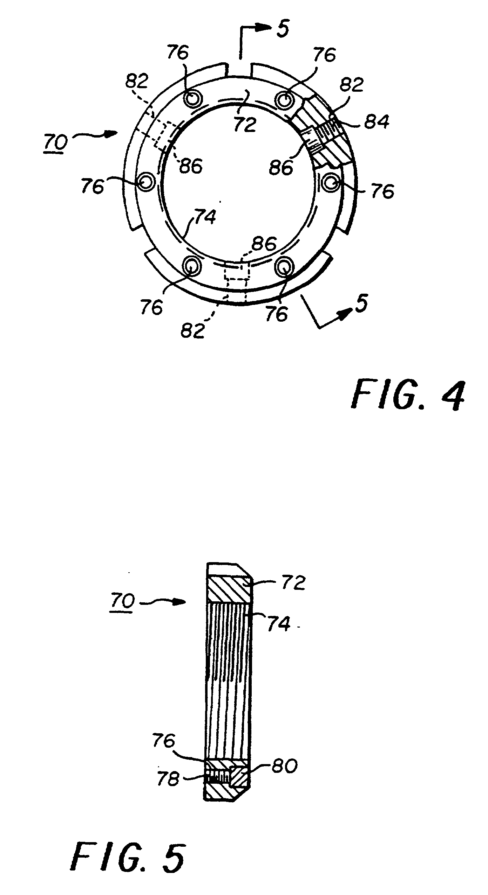

Figures 4 and 5 illustrate the features of lock nut 70. An annular body portion 72 is provided with a central threaded bore 74. Surrounding bore 74 are a plurality circumferentially spaced, threaded through bores 76, each bore 76 extending essentially parallel to the axis of rotation of the nut. In each bore 76 is located a screw 78 which bears upon a metal plug 80 positioned in an unthreaded end portion of bore 76. Preferably, plug 80 is made from a material, such as brass, which is softer than screw 78 and washer 68. At initial installation of lock nut 70, screws 78 are not tightened against plugs 80. Also surrounding bore 74 is a further, conventional plurality of circumferentially spaced, threaded through bores 82, each bore extending essentially radially toward the axis of rotation of the nut. In each bore 82 is located a screw 84 which bears upon a threaded metal shoe 86. Preferably, shoe 86 is made from a material, such as brass, which is softer than the material of shaft extensions 34, 40. After the lock nut has been torqued to the necessary preload, screws 84 are tightened against shoes 86 in the familiar manner to prevent the nut from backing off.

After bearing assemblies 54, 56 have been installed and lock nuts 70 have been torqued to the preload required by the bearing manufacturer, the radial runout of each bearing assembly is measured against an outer cylindrical surface 88 of each housing 58; and the axial runout of each bearing assembly is measured against a radially extended surface 90 of each flange 60. Potential causes for such axial and radial runout can include preload forces of the lock nut, lack of squareness between the faces of the lock nut and the axis of rotation of the bearings and similar factors. In an actual application for rotary tools of the type illustrated, the radial and axial runouts at this point during assembly have been measured in the range of 0.0001 to 0.0002 inch (0.0025 to 0.0050 mm). To reduce this amount of runout, screws 78 were tightened against plugs 80. Those skilled in the art will appreciate that pressure from plugs 80 against washer 68 will cause slight changes in geometry, such as very small deflection of shaft extensions 34, 40, which can be adjusted to reduce the amount of runout measured. In the same actual application, use of the lock nut enabled radial and axial runout to be reduced by about a factor often, to less than 0.000040 inch (0.001 mm). In this application, the lock nut had an outer diameter of about 2.25 inch (57.2 mm) and an inner diameter of about 1.5 inch (38.1 mm), with bores 76 set 60' apart. Screws 78 had a diameter of about 0.164 inch (4.17 mm); and plugs 80, a diameter of about 0.188 inch (4.78 mm).

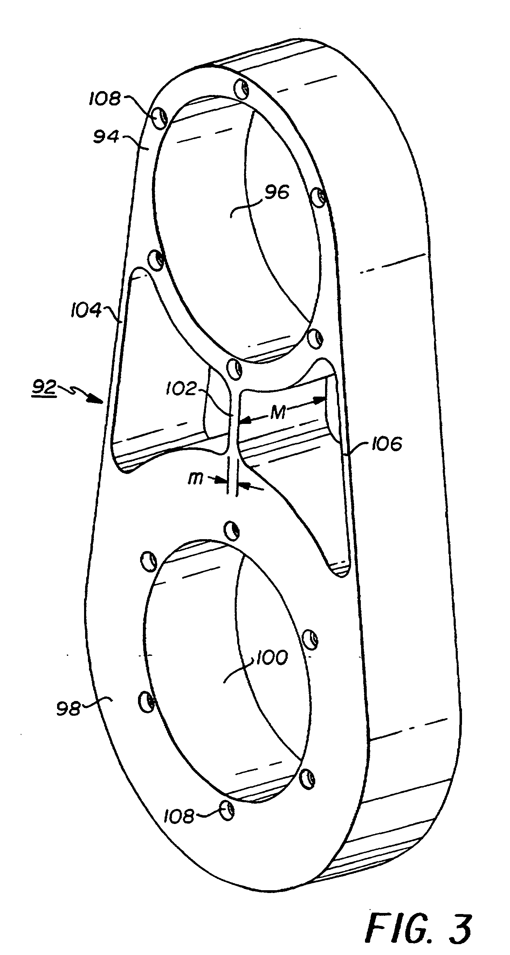

Once lock nuts 70 have been adjusted to produce the desired runout, a constraint member 92 is installed. As shown in Figure 3, constraint member 92 comprises an upper, cylindrical body portion 94 having a through bore 96 and a lower cylindrical body portion 98 having a through bore 100. Bores 96 and 100 are sized to have a substantial radial clearance of about 0.002 inch (0.051 mm) to outer cylindrical surfaces 88 of bearing housings 58. At least one flexure 102 is extended between body portion 94, 99, in the illustrated embodiment essentially in a plane containing the axes of bores 96, 100. Flexure 102 has a major width dimension M measured essentially parallel to the axes of bores 96, 100 and a minor width dimension m measure essentially transverse to the axes of the bores. A pair of side flexures 104, 106 may be positioned on either side of central flexure 102. Flexures 104, 106 may be angled toward each other, as illustrated, to ease access to the working nip between tools 18, 20.

Those skilled in the art will appreciate, however, that flexures 102, 104, 106 are not limited in geometry and location to the configuration of the illustrated embodiment. The geometry and material of the flexures may be chosen as necessary to enable member 92 to serve as a tuned compliance between the cantilever shafts, as suitable for a particular application. The flexures may be designed to produce a desired spring rate in the direction(s) most suitable for a particular rotary tool pair, to withstand the radial and axial run-out forces expected for the particular application. Thus, run-out motion may be limited in accordance with our invention, without adding excessive strain to the shafts or excessive, damaging loads to bearings, tools, cantilever shafts or shaft extensions. Those skilled in the art accordingly will appreciate that the flexures may have various cross sections, such as square, round, oval and the like, or may be built up from several leaves, without departing from the scope of the invention. As illustrated, constraint member 92 is formed integrally of body portions 94, 98 and flexures 102 - 106; however, those skilled in the art will appreciate that an assembly of separate parts also may be used. To minimize the weight of the constraint member and to more closely match thermal expansion characteristics of the remainder of the assembly, titanium has been found to be a suitable material.

Constraint member 92 is installed by slipping bores 96, 100 over surfaces 88 of the bearing housings until radial surfaces 90 are contacted. Surrounding each bore is a circumferentially extending array of through bores 108 through which a corresponding plurality of screws 110 extend to engage a corresponding plurality of tapped holes in flanges 60. Sufficient clearance is provided between bores 108 and screws 110 for ease of installation. In some applications, slight movement of constraint member will be observed. Radial movement may be limited, if desired, by means such as a ball and spring plunger 111 installed next to die tool 20, as illustrated schematically in Figure 1.

A constraint member having the illustrated geometry, coupled with bearing assemblies and lock nuts of the types previously described, was effective to reduce radial and axial runout of a tool pair from a range of 0.000460 to 0.000480 inch (0.0117 to 0.0122 mm), to a greatly improved range of 0.000090 to 0.000 115 inch (0.0023 to 0.0029 mm). Consider the case with a Y-axis transverse to the axes of rotation of the tools, an X-axis transverse to the same axes; and a Z-axis parallel to the same axes. In general, constraint systems according to the invention are effective to limit movement of the tools in the Y direction, meaning that good engagement is maintained with the work piece. Some benefit also is realized in the X direction and, to a lesser extent, in the Z direction. Should additional stiffness in the X direction be desired, limited stiffness external braces can be added.

While the invention has been shown and described with reference to a particular embodiment thereof, those skilled in the art will understand that other variations in form and detail may be made without departing from the scope of the claimed invention.

## Claims

1. A lock nut (70) for installation on a threaded shaft (34, 40), the nut comprising a body portion (72) with a central threaded bore (74), a plurality of circumferentially spaced, threaded through bores (76) in the body portion, each through bore (76) being essentially parallel to an axis of rotation of the lock nut; and a corresponding plurality of screws (78) in the circumferentially spaced, threaded bores (76), whereby at least one of the screws (78) may be adjustably engaged with an adjacent structure to reduce run-out of a threaded shaft on which the nut is installed; and wherein a plurality of circumferentially spaced, threaded through bores (82) extended radially toward the axis of rotation of the lock nut; a corresponding further plurality of radially movable, threaded shoes (86) and a corresponding further plurality screws (84) in the further plurality of threaded through bores (82) for pressing the shoes against the threaded shaft (34, 40), and further a metallic plug (80) positioned in an unthreaded end portion of each of the threaded bores (76), each of said metallic plugs (80) being caused to move in its respective bore (76) when the corresponding screw (78) is turned exerting pressure on the plug (80) thereby preventing axial run-out of said threaded shaft on which the nut is installed.

## Patentansprüche

1. Verriegelungsmutter (70) zur Befestigung auf einer Gewindewelle (34, 40), mit einem Abschnitt (72), der eine mittige Gewindebohrung (74) aufweist, einer Vielzahl auf der Umfangsfläche beabstandeter, mit einem Gewinde versehener Bohrlöcher (76) in dem Abschnitt, wobei sich jedes Bohrloch (76) im wesentlichen parallel zu einer Drehachse der Verriegelungsmutter erstreckt, einer entsprechenden Vielzahl von Schrauben (78) in den auf der Umfangsfläche beabstandeten, mit Gewinde versehenen Bohrlöcher (76), wodurch mindestens eine der Schrauben (78) mit einer benachbarten Struktur einstellbar in Eingriff bringbar ist, um zu verhindern, dass eine Gewindewelle, auf der die Verriegelungsmutter befestigt ist, sich verstellt, und wobei eine Vielzahl von auf der Umfangsfläche beabstandeten, mit einem Gewinde versehenen Bohrlöchern (82) sich radial zur Drehachse der Verriegelungsmutter hin erstreckt, und mit einer entsprechenden weiteren Vielzahl von radial bewegbaren, mit einem Gewinde versehenen Gleitstücken (86) und einer entsprechenden weiteren Vielzahl von Schrauben (84) in der weiteren Vielzahl der mit Gewinde versehenen Bohrlöcher (82) zum Drücken der Gleitstücke gegen die Gewindewelle (34, 40), und mit einem Metallstift (80), der in einem nicht mit einem Gewinde versehenen Endabschnitt eines jeden Bohrlochs (76) angeordnet ist, wobei jeder Metallstift (80) in sein entsprechendes Bohrloch (76) bewegbar ist, wenn die entsprechende Schraube (78) angezogen und dadurch Druck auf den Metallstift (80) ausgeübt wird, wodurch ein axiales Verstellen der Gewindewelle, auf der die Verriegelungsmutter installiert ist, verhinderbar ist.

## Revendications

1. Ecrou de blocage (70) destiné à une installation sur un arbre fileté (34, 40), l'écrou comprenant une partie de corps (72) comportant un alésage taraudé central (74), une pluralité d'alésages traversants taraudés, circonférentiellement espacés (76) dans la partie de corps, chaque alésage traversant (76) étant essentiellement parallèle à un axe de rotation de l'écrou de blocage, et une pluralité de vis correspondantes (78) dans les alésages taraudés, circonférentiellement espacés (76), grâce à quoi au moins l'une des vis (78) peut être mise en prise de façon ajustable avec une structure adjacente pour réduire le faux rond d'un arbre fileté sur lequel l'écrou est installé, et dans lequel une pluralité d'alésages traversants taraudés circonférentiellement espacés (82) s'étendent radialement vers l'axe de rotation de l'écrou de blocage, une autre pluralité correspondante de patins filetés radialement mobiles (86) et une autre pluralité correspondante de vis (84) dans l'autre pluralité d'alésages traversants taraudés (82) destinées à presser les patins contre l'arbre fileté (34, 40), et en outre un bouchon métallique (80) positionné dans une partie d'extrémité non taraudée de chacun des alésages taraudés (76), chacun desdits bouchons métalliques (80) étant amené à se déplacer dans son alésage respectif (76) lorsque la vis correspondante (78) est tournée en exerçant une pression sur le bouchon (80) en empêchant ainsi un faux rond axial dudit arbre fileté sur lequel l'écrou est installé.
